# EUROPEAN PATENT APPLICATION

(11) **EP 3 644 430 A1**
(43) Date of publication of application: **29.04.2020**
(21) Application number: 19205512.7
(22) Date of filing: 25.10.2019
(51) Int. Cl.: H01M 10/42, H02J 7/00, H01M 2/10, H01M 2/20, H01M 16/00

(54) **LARGE-CAPACITY BATTERY SYSTEM**

(30) Priority: 26.10.2018 CZ 20183553
(71) Applicant: Casava s.r.o., 15800 Praha 5 - Stodulky (CZ); Dukom s.r.o., 25601 Vaclavice (CZ); Power Communications s.r.o., 62700 Brno, Slaina (CZ)
(72) Inventor: JIRIKOVSKY, Petr, 12000 Praha 2 - Vinohrady (CZ); CHLISTOVSKY, Jan, 25601 Vaclavice (CZ)
(74) Representative: Kratochvil, Vaclav

(57) **Abstract**

The large-capacity battery system for electrical energy storage containing at least one block (1) for connecting of at least three batteries (5) with different voltage and/or different capacity and/or different technology which is connected by means of a data line (2) to a module (3) for work with the battery connected to a converter (4) for different battery types, to ensure control and integration of the battery system.

## Description

### Field of Invention

The invention relates to the electric part of a modular large-capacity battery system for electrical energy storage.

### Background of the Invention

Many systems and equipment are currently used for large-capacity storage of electrical energy.

Large-capacity battery systems consist of boxes where batteries are located. These boxes are mostly designed for one type with defined capacity, and different battery types with different capacity can not be inserted.

One of the other problems of current large-capacity battery systems is also work with one nominal voltage type of particular batteries, which again prevents the variability to use different types of batteries with a different nominal voltage.

The lifetime of battery systems is planned for up to 15 to 20 years. Based on current technical solutions, a particular battery type, mostly from a particular manufacturer, must be utilized, which in a long-term perspective places demands on having spare batteries, precludes use of modern battery technologies, or alternatively involves demanding modifications for connecting and related higher operation and maintenance costs.

### Summary of the Invention

The above stated problems and deficiencies are solved to a large extent by the large-capacity modular battery system according to this invention. The modular battery system itself combines two new approaches from the perspective of work with different battery types and simultaneously with different voltages and battery capacities.

A significant advantage of the invention of the modular battery system is simultaneous use of different battery types working with different voltages in a very large voltage range. The working voltage range can amount to from 150 to 840 V.

Furthermore, the large-capacity battery system enables work with different capacities of individual batteries. The batteries will be integrated into individual blocks. In these blocks, the batteries will be serially and parallelly connected.

Another advantage of the invention is that each block will enable integration of at least three different battery types with different capacity, and, where needed, also with at least three different voltage types.

At the same time, the equipment enables to combine different battery technology types, e.g. lead-acid batteries, LiFePo4, Ni-Cd, NiMA, Li-Ion.

Another advantage of the invention is its simple maintenance and long-term sustainability.

This invention has a positive effect on ecology and environment cleanliness since some enable to use different battery types also with different age and related different capacity. It also enables to increase the exploitability of batteries as such as well as to extend their life cycle.

### Brief Description of the Drawings

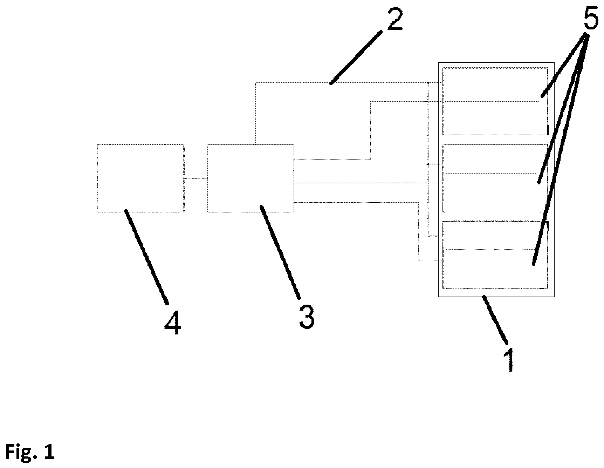

The invention of the modular large-capacity battery system with different battery capacity and voltage is described in the attached schematic illustration. Figure 1 shows a schematic illustration depicting the connection of batteries having different voltage, different capacity and technology type. These batteries are connected by means of a data line to a module for work with the battery which ensures control, integration to converters of different battery types.

### Examples of Invention Embodiments

The exemplary large-capacity battery system for electrical energy storage contains three blocks 1 for connecting of three batteries 5 with different voltages, different capacity and different technology by means of a data line 2 to a module 3 work for with the battery 5 connected to a converter 4 of different battery 5 types to ensure control and integration. The blocks 1 are for batteries 5 working with operating voltages ranging from 150 to 840 V. The batteries 5 are serially as well as parallelly connected in the block 1.

### Industrial Applicability

The large-capacity modular battery system finds use in many areas and fields. These are areas where energy storage for future use is required, elimination of peak electrical energy consumption must be addressed, and furthermore when dealing with energy company management. This issue relates to the energy sector, manufacturing companies of the automotive industry. The system may further be used in combination with photovoltaic systems to store surpluses of produced energy or as a supplement to the charging infrastructure of electric vehicles.

## Claims

1. The large-capacity battery system for electrical energy storage **characterized in that** it contains at least one block (1) for connecting of at least three batteries (5) with different voltage and/or different capacity and/or different technology which is connected by means of a data line (2) to a module (3) for work with the battery connected to a converter (4) for different battery types, to ensure control and integration of the battery system.

2. The large-capacity battery system according to claim 1 **characterized in that** the block (1) is for batteries (5) with operating voltages in the range from 150 to 840 V.

3. The large-capacity battery system according to claims 1 or 2 **characterized in that** the batteries (5) are connected in series in the block (1).

4. The large-capacity battery system according to claims 1 or 2 **characterized in that** the batteries (5) are connected parallelly in the block (1).
